# EUROPÄISCHE PATENTSCHRIFT

(11) **EP 3 683 484 B1**
(45) Veröffentlichungstag und Bekanntmachung des Hinweises auf die Patenterteilung: **28.09.2022**
(21) Anmeldenummer: 20150669.8
(22) Anmeldetag: 08.01.2020
(51) Int. Cl.: F16L 37/26, D06F 58/20, D06F 57/00, D06F 59/00

(54) **ROHRKOPPELSYSTEM**
PIPE COUPLING SYSTEM
SYSTÈME D'ACCOUPLEMENT DE TUYAUX

(30) Priorität: 16.01.2019 AT 500322019
(43) Veröffentlichungstag der Anmeldung: 22.07.2020
(73) Patentinhaber: Jannach, Helmut, 8045 Graz (AT)
(72) Erfinder: Jannach, Helmut, 8045 Graz (AT)
(74) Vertreter: Puchberger & Partner Patentanwälte

(56) Entgegenhaltungen:
- AT-A1- 516 342
- US-A- 3 092 403
- US-A- 5 439 258

## Beschreibung

Die Erfindung betrifft ein Rohrkoppelsystem, sowie eine Trocknungsvorrichtung, welche das erfindungsgemäße Rohrkoppelsystem umfasst.

Trocknungsvorrichtungen bzw. Trocknungsanlagen sind im Stand der Technik für das Trocknen von Gegenständen wie insbesondere Kleidungsstücken bekannt. Derartige bekannte Vorrichtungen umfassen üblicherweise wenigstens ein Trocknungsrohr, welches in seiner Form bzw. in seinem Verlauf an das zu trocknende Kleidungsstück angepasst ist. Das Trocknungsrohr weist mehrere Luftauslassöffnungen auf, durch welche durch das Rohr geleitete, gegebenenfalls erwärmte, Druckluft entweichen kann, um so das Kleidungsstück von innen zu trocknen.

Um ein bereits getrocknetes Kleidungsstück in effizienter Weise von der Trocknungsvorrichtung entfernen zu können, ist es im Stand der Technik bekannt, das Kleidungsstück mitsamt dem Trocknungsrohr von der Trocknungsvorrichtung abzunehmen, womit das Trocknungsrohr weiterhin als eine Art Kleiderbügel verwendet wird. Gleichzeitig wird dadurch an der Trocknungsvorrichtung Platz für ein weiteres Kleidungsstück geschaffen.

Um die Verbindung des Trocknungsrohres mit der Trocknungsvorrichtung zu verbessern, wurden im Stand der Technik bereits Rohrkoppelsysteme für einen derartigen Einsatz vorgeschlagen. Ein solches Rohrkoppelsystem wird in der österreichischen Patentanmeldung AT 516 342 A1 geoffenbart. Das hier beschriebene Rohrkoppelsystem umfasst zwei Rohrstücke, wobei ein Rohrstück ein Koppelorgan und das andere Rohrstück eine Aufnahme für das Koppelorgan aufweisen. Die Verbindung zwischen den beiden Rohrstücken kann mit einer aufschiebbaren Hülse gesichert werden, wobei die Hülse durch mit den Rohrstücken in Kontakt stehenden Dichtungsringen in Position gehalten wird.

Derartige Dichtungsringe halten die Hülse immer in einer festen Position, weshalb beim Verschieben der Hülse ein erhöhter Kraftaufwand möglich sein kann. Ferner kann das Verschieben der Hülse dadurch erschwert werden, wenn der Benutzer beispielsweise nur eine Hand frei hat. Andere Rohrverbindungssysteme sind beispielsweise aus der US 3092403 A bekannt. Dort geoffenbarte Sicherungshülsen sind mit einem Gewinde oder einer ringförmigen Kupplung an einem Rohr befestigbar. Auch diese Verbindungen sind nicht einfach einhändig betätigbar.

Es ist eine Aufgabe der vorliegenden Erfindung, diesen Nachteil des Standes der Technik zu überwinden und ein Rohrkoppelsystem zu schaffen, welches nicht den Einsatz einer Hülse mit einem Dichtungsring erfordert.

Die Aufgabe der Erfindung wird durch das kennzeichnende Merkmal des unabhängigen Patentanspruchs gelöst. Weitere Merkmale von bevorzugten Ausführungsformen der Erfindung ergeben sich aus den abhängigen Patentansprüchen, den Figuren, sowie aus den Ausführungsbeispielen.

Die Erfindung betrifft ein Rohrkoppelsystem, insbesondere für eine Trocknungsanlage, umfassend ein erstes Anschlussrohr, ein mit dem ersten Anschlussrohr über ein Verbindungselement verbindbares zweites Anschlussrohr, sowie eine Sicherungshülse, wobei das Verbindungselement in einen Aufnahmebereich des ersten Anschlussrohrs einführbar ist, und wobei die Sicherungshülse verschiebbar über dem ersten Anschlussrohr derart angeordnet ist, dass die Sicherungshülse über dem Aufnahmebereich positionierbar ist

Erfindungsgemäß ist vorgesehen, dass die Sicherungshülse an ihrer Innenwandung einen Einführbereich aufweist, in welchen ein an der Außenseite des ersten Anschlussrohrs oder des zweiten Anschlussrohrs angeordnetes Rastelement einführbar oder eingeführt ist.

Durch das Zusammenwirken aus Einführbereich und Rastelement wird eine verschleißfreie Konstruktion des Sicherungsmechanismus geschaffen, welche nicht von der Reibungswirkung eines Elements, wie insbesondere eines Dichtungsrings, abhängig ist. Die Sicherungshülse ist bevorzugt als rohrförmige Struktur oder als rohrförmiges Element ausgebildet. Der Innendurchmesser der Sicherungshülse ist bevorzugt nur etwas größer als der Außendurchmesser des Anschlussrohrs, auf welchem das Rastelement für den Einführbereich der Sicherungshülse vorgesehen ist. Dabei kann der Innendurchmesser der Sicherungshülse gegebenenfalls zwischen 0,01 mm und 0,5 mm größer sein als der Außendurchmesser des Anschlussrohrs. Der Begriff "Außendurchmesser des Anschlussrohrs" bezieht sich insbesondere auf die breiteste Stelle jenes Bereichs des Anschlussrohrs bzw. der Anschlussrohre, über welchen die Sicherungshülse bewegt werden soll. Dies bedeutet, dass das erste oder das zweite Anschlussrohr in bestimmten Bereichen einen größeren Außendurchmesser aufweisen kann, wenn nicht vorgesehen ist, dass die Sicherungshülse über jenen Bereich bewegt wird. Gegebenenfalls kann eine Verbreiterung des Anschlussrohrs auch als Hülsenanschlag dienen, um die Bewegbarkeit der Sicherungshülse zu begrenzen. Der Begriff "Innendurchmesser der Sicherungshülse" bezieht sich auf jenen Bereich der Sicherungshülse, in welchem kein Einführbereich vorgesehen ist, also insbesondere den kleinesten Durchmesser eines kreisförmigen Querschnitts der Sicherungshülse.

Die Parameter des Einführbereichs werden in Zusammenhang mit der vorliegenden Erfindung als "Tiefe" und "Höhe" bezeichnet. Die Tiefe bezeichnet die Erstreckungstiefe des Einführbereichs, welche bevorzugt parallel zur Zentralachse bzw. zur Haupterstreckungsrichtung der Sicherungshülse verläuft. Bevorzugt ist die Tiefe kleiner als die Hülsenlänge, wodurch ein Hülsenanschlag im Inneren der Sicherungshülse gebildet wird, sodass die Sicherungshülse nur in begrenztem Maße in Richtung des jeweils anderen Anschlussrohrs bewegt werden kann, nämlich nur soweit, bis das Rastelement mit dem Hülsenanschlag in Kontakt kommt. Die Höhe des Einführbereichs bezeichnet hingegen die Höhe des Einführbereichs in der Wandung der Sicherungshülse. Bevorzugt ist die Höhe kleiner als die Dicke der Wandung der Sicherungshülse. Es kann jedoch auch vorgesehen sein, dass der Einführbereich eine Höhe aufweist, welcher der Dicke der Wandung entspricht. Der Einführbereich kann also von einem Teil der Wandung nach oben abgedeckt sein, sie kann aber auch nach oben offen sein.

Die oben genannte Tiefe ist bevorzugt so bemessen, dass die Sicherungshülse in der Sperrstellung den Aufnahmebereich abdeckt bzw. das Herausrutschen des Verbindungselements aus dem Aufnahmebereich verhindert. Dazu ist bevorzugt das Eingriffsmittel am ersten Anschlussrohr passend positioniert.

Gegebenenfalls ist vorgesehen, dass das Rastelement als Zapfen ausgebildet ist.

Erfindungsgemäß ist vorgesehen, dass der Einführbereich als Nut ausgebildet ist. Bevorzugt ist in diesem Fall das Rastelement als Zapfen ausgebildet. Die Nut kann am inneren Umfang der Sicherungshülse verlaufen. Erfindungsgemäß verläuft die Nut parallel zur Haupterstreckungsrichtung der Sicherungshülse bzw. zur Hülsenlänge.

Gegebenenfalls kann das Rastelement auch mehr als einen Zapfen umfassen, wobei dann die Ausführung des Einführbereichs entsprechend ausgebildet sein kann, um das Rastelement aufnehmen zu können.

Gegebenenfalls ist vorgesehen, dass das Rastelement als das erste Anschlussrohr teilweise oder vollständig radial umlaufender Haltering ausgebildet ist, oder dass das Rastelement als Vorsprung des ersten Anschlussrohrs oder des zweiten Anschlussrohrs ausgebildet ist. Der Haltering oder der Vorsprung kann einen Hülsenanschlag bilden. Der Haltering oder Vorsprung kann bevorzugt einen größeren Durchmesser aufweisen als der Innendurchmesser der Sicherungshülse.

Gegebenenfalls ist vorgesehen, dass das Einführbereich als ein den inneren Umfang der Sicherungshülse teilweise oder vollständig umlaufender Falz ausgebildet ist.

Gegebenenfalls ist vorgesehen, dass der Aufnahmebereich eine den inneren Umfang des ersten Anschlussrohres teilweise umlaufende Haltenut umfasst, und dass das Verbindungselement als Kragen ausgebildet ist, wobei der Kragen derart ausgeführt ist, dass er in die Haltenut einführbar ist.

Gegebenenfalls ist vorgesehen, dass die Länge des Einführbereichs größer als der Abstand des Rastelements zum Aufnahmebereich ist.

Die Form des Einführbereichs kann von einem Fachmann gemäß den Möglichkeiten gewählt werden und sie ist bevorzugt an die Form des Rastelements angepasst. Die Querschnittsform einer Nut kann also gegebenenfalls der Form des Rastelements, insbesondere eines Zapfens, entsprechen. Die Form des Nutquerschnitts und die Form des Rastelements können insbesondere rechteckig, quadratisch, halbkreisförmig oder bogenförmig sein. Bevorzugt ist das Eingriffsmittel halbkugelförmig ausgebildet, wobei in diesem Fall der Querschnitt der Nut halbkreisförmig sein kann.

Bevorzugt ist der Eingriff aus Verbindungselement und korrespondierendem Aufnahmebereich so ausgebildet, dass das Innere des ersten Anschlussrohrs und des zweiten Anschlussrohrs fluchtend angeordnet sind, wodurch der Luftstrom den Verbindungsbereich ungehindert durchströmen kann.

Gegebenenfalls ist also vorgesehen, dass in vollständig eingeführter Stellung des Verbindungselements in den Aufnahmebereich die Innenwandung des ersten Anschlussrohrs mit der Innenwandung des zweiten Anschlussrohrs fluchtend angeordnet ist.

Bevorzugt ist auf jener dem Aufnahmebereich entgegengesetzten Seite des Anschlussrohrs ein Anschlag vorgesehen, um das Herausrutschen des Rastelements aus der Nut zu verhindern. Der Anschlag kann als Anschlagsmittel gebildet sein, beispielsweise als Vorsprung, jedoch alternativ auch als Verbreiterung des Anschlussrohrs. Bevorzugt wird der Anschlag durch ein Verteilerrohr gebildet, an welchem das erste Anschlussrohr befestigt ist. Bevorzugt wird die Verbindung zwischen dem ersten Anschlussrohr und dem Verbindungsrohr durch eine Gewindeverbindung hergestellt.

Gegebenenfalls ist also vorgesehen, dass das erste Anschlussrohr oder das zweite Anschlussrohr an einem Verteilerrohr anordenbar oder angeordnet ist, wobei die Haupterstreckungsrichtung des Verteilerrohrs orthogonal zur Haupterstreckungsrichtung des ersten Anschlussrohrs oder des zweiten Anschlussrohrs verläuft.

Gegebenenfalls ist vorgesehen, dass das Verteilerrohr einen Anschlag für die Sicherungshülse bildet, wobei der Abstand des Rastelements zum Anschlag kleiner als die Hülsenlänge ist.

Gegebenenfalls ist vorgesehen, dass das mit dem Verteilerrohr verbindbare oder verbundene Anschlussrohr ein Gewinde zur lösbaren Verbindung mit dem Verteilerrohr umfasst.

Der Eingriff des Verbindungselements in den Aufnahmebereich kann gegebenenfalls im Wesentlichen durch jede im Stand der Technik bekannte Verbindung erfolgen, die das Verbinden zweier Rohrelemente durch seitliches Einführen eines Verbindungselements in einen Aufnahmebereich ermöglichen. Bevorzugt ist der Aufnahmebereich als den inneren Umfang des ersten Anschlussrohres teilweise umlaufende Nut ausgebildet, deren Form und Dimensionierung an einen Kragen oder eine anderweitige Form des Verbindungselements angepasst ist. Zum Einführen und Ausführen des Verbindungselements in den Aufnahmebereich ist bevorzugt eine Einführöffnung vorgesehen, die den Aufnahmebereich nach außen öffnet. Im Aufnahmebereich bzw. am Verbindungselement können gegebenenfalls Dichtungselemente vorgesehen sein, wobei es sich hierbei jedoch nicht um ein notwendiges Merkmal handelt. Wird nur Luft durch die Verbindung geleitet, ist die Verbindung auch ohne die Verwendung von Dichtungen hinreichend dicht. Wird die Verbindung auch zur Beförderung von Flüssigkeiten eingesetzt, kann eine Abdichtung vorteilhaft sein.

Am zweiten Anschlussrohr ist gegebenenfalls ein Trocknungsrohr angeordnet, welches bevorzugt über eine oder mehrere Steckverbindungen mit dem zweiten Anschlussrohr verbunden oder verbindbar ist. Das Trocknungsrohr weist wenigstens eine, bevorzugt mehrere Luftauslassöffnungen auf, durch welche Luft ausströmen kann. Das Trocknungsrohr kann verschiedene Formen aufweisen, die dem Fachmann aus dem Stand der Technik bekannt sind. Wird eine Trocknungsvorrichtung mit dem erfindungsgemäßen Rohrkoppelsystem zum Trocknen von Kleidungsstücken eingesetzt, kann das Trocknungsrohr beispielsweise im Wesentlichen die Form des zu trocknenden Kleidungsstücks aufweisen. Wird das Trocknungsrohr also beispielsweise zum Trocknen eines Ganzkörperanzugs vorgesehen, kann das Trocknungsrohr Elemente aufweisen, die in Arm- und Beinbereiche, sowie in den Torsobereich des Ganzkörperanzugs eingeführt werden. Dadurch kann das Trocknungsrohr auch als einem Kleiderbügel ähnliche Vorrichtung wirken.

Gegebenenfalls kann also vorgesehen sein, dass am ersten Anschlussrohr oder am zweiten Anschlussrohr ein Trocknungsrohr anordenbar oder angeordnet ist, wobei das Trocknungsrohr wenigstens eine Luftauslassöffnung umfasst.

Gegebenenfalls kann vorgesehen sein, dass das Trocknungsrohr über eine Steckverbindung mit dem ersten Anschlussrohr oder dem zweiten Anschlussrohr lösbar verbindbar ist.

Gegebenenfalls kann das erste Aufnahmerohr mit einem Verteilerrohr verbunden oder verbindbar sein, wobei dann das zweite Aufnahmerohr mit dem Trocknungsrohr verbunden oder verbindbar ist. Alternativ kann auch das zweite Aufnahmerohr mit einem Verteilerrohr verbunden oder verbindbar sein, wobei dann das erste Aufnahmerohr mit dem Trocknungsrohr verbunden oder verbindbar ist.

Bevorzugt ist das Rastelement an jenem Anschlussrohr angeordnet, welches mit dem Verteilerrohr verbunden oder verbindbar ist. Bevorzugt ist das Rastelement am ersten Anschlussrohr angeordnet, wenn das erste Anschlussrohr mit dem Verteilerrohr verbindbar oder verbunden ist. Demgemäß ist bevorzugt das Trocknungsrohr mit dem zweiten Anschlussrohr verbunden oder verbindbar. Es ist also bevorzugt, dass das Rastelement an jenem Anschlussrohr angeordnet ist, welches sich in der bestimmungsgemäßen Verwendung des Rohrkoppelsystems oben befindet. Dies bedeutet, dass die Sicherungshülse durch Schwerkraftwirkung in die Sperrstellung bewegt wird.

Wäre das Rastelement alternativ am unteren Anschlussrohr angeordnet, würde die Sicherungshülse durch die Schwerkraftwirkung in die Freigabestellung bewegt werden. In diesem Fall müsste ein Haltemittel, wie etwa ein innenliegender Dichtungsring, vorgesehen sein, um die Sicherungshülse dauerhaft in der Sperrstellung zu halten.

Gegebenenfalls ist vorgesehen, dass der Aufnahmebereich zum Einführen des Verbindungselements eine Einführöffnung umfasst.

Gegebenenfalls ist vorgesehen, dass die Sicherungshülse zwischen einer Freigabestellung und einer Sperrstellung bewegbar ist, wobei die Sicherungshülse in der Freigabestellung den Anschlussbereich freigibt, und wobei die Sicherungshülse in der Sperrstellung wenigstens teilweise über dem Anschlussbereich angeordnet ist.

Gegebenenfalls ist vorgesehen, dass ein Hülsenanschlag vorgesehen ist, wobei die Länge des Einführbereichs kleiner ist als die Hülsenlänge der Sicherungshülse.

Gegebenenfalls ist vorgesehen, dass das Rastelement am ersten Anschlussrohr angeordnet ist, dass das erste Anschlussrohr mit dem Verteilerrohr verbunden oder verbindbar ist, und dass das Trocknungsrohr am zweiten Anschlussrohr anordenbar oder angeordnet ist.

Die Erfindung betrifft ferner eine Trocknungsvorrichtung umfassend ein erfindungsgemäßes Rohrkoppelsystem.

Bei einer Trocknungsvorrichtung, die das erfindungsgemäße Rohrkoppelsystem umfasst, können gegebenenfalls mehrere Verteilerrohre vorgesehen sein, am welchen jeweils bevorzugt mehrere erste und zweite Anschlussrohre befestigt sind. Bevorzugt wird von einer Trocknungsvorrichtung Luft mit erhöhtem Druck bereitgestellt, welche über der Verteilerrohr über das erste Anschlussrohr und das zweite Anschlussrohr in das Trocknungsrohr geleitet wird, wo die Luft über die Luftauslassöffnungen austreten kann.

Im Folgenden wird die vorliegende Erfindung anhand eines exemplarischen Ausführungsbeispiels im Detail erläutert. Die Merkmale des Ausführungsbeispiels sollen nicht der Einschränkung des Schutzbereichs dienen, sondern lediglich die Erfindung näher illustrieren.

Es zeigen:
Fig. 1 eine schematische seitliche Schnittansicht eines ersten Ausführungsbeispiels eines erfindungsgemäßen Rohrkoppelsystems in verbundenem Zustand mit Sicherungshülse in Freigabestellung;
Fig. 2 eine schematische seitliche Schnittansicht des ersten Ausführungsbeispiels eines erfindungsgemäßen Rohrkoppelsystems in verbundenem Zustand mit Sicherungshülse in Sperrstellung;
Fig. 3 eine schematische seitliche Schnittansicht eines Anschlussrohrs des erfindungsgemäßen Rohrkoppelsystems;
Fig. 4 eine schematische Aufsicht eines Anschlussrohrs des erfindungsgemäßen Rohrkoppelsystems;
Fig. 5 eine schematische seitliche Schnittansicht eines zweiten Anschlussrohrs des erfindungsgemäßen Rohrkoppelsystems;
Fig. 6 eine schematische seitliche Schnittansicht eines weiteren Beispiels eines nicht erfindungsgemäßen Rohrkoppelsystems in verbundenem Zustand mit Sicherungshülse in Freigabestellung;
Fig. 7 eine schematische seitliche Schnittansicht des weiteren Beispiels eines Rohrkoppelsystems in verbundenem Zustand mit Sicherungshülse in Sperrstellung.

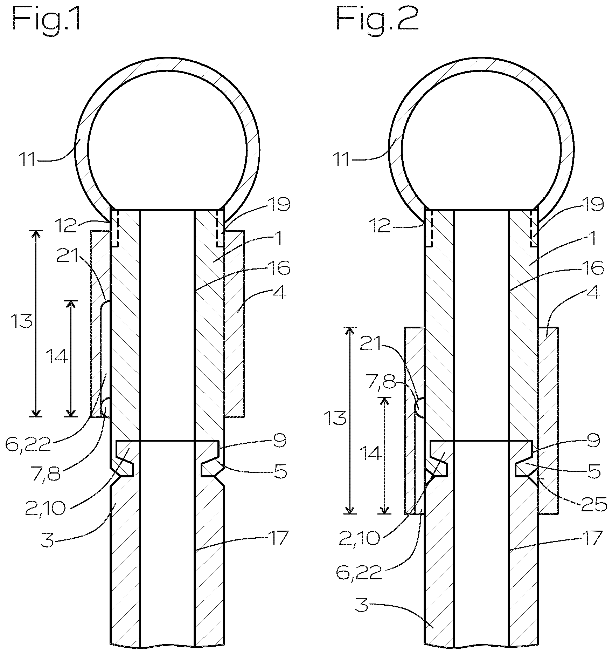

Fig. 1 zeigt eine schematische seitliche Schnittansicht eines erfindungsgemäßen Rohrkoppelsystems in verbundenem Zustand mit Sicherungshülse 4 in Freigabestellung, während Fig. 2 das erfindungsgemäße Rohrkoppelsystem in verbundenem Zustand mit Sicherungshülse 4 in Sperrstellung zeigt. Die Fig. 1 und 2 zeigen die erfindungsgemäße Vorrichtung gemäß einem ersten Ausführungsbeispiel.

Die Fig. 1 und 2 zeigen das erste Anschlussrohr 1, welches über ein Gewinde 19 mit dem Verbindungsrohr 11 einer Trocknungsvorrichtung luftleitend verbunden ist. An seinem dem Gewinde 19 entgegengesetzten Ende weist das erste Anschlussrohr 1 einen Aufnahmebereich 5 auf, welcher in Form einer Haltenut 9 ausgebildet ist. Die Haltenut 9 umläuft den inneren Umfang des ersten Anschlussrohrs 1 teilweise, wobei eine Einführöffnung 18 zum Einführen eines Verbindungselements 2 in die Haltenut 9 vorgesehen ist.

Die Haupterstreckungsrichtung des Verbindungsrohrs 11 verläuft im Wesentlichen orthogonal zur Haupterstreckungsrichtung des ersten Anschlussrohrs 1 und des zweiten Anschlussrohrs 3. Dabei verläuft die Haupterstreckungsrichtung des Verbindungsrohrs 11 aus der Zeichnungsebene heraus.

In Fig. 1 und 2 ist zu sehen, dass das Verbindungselement 2 des zweiten Anschlussrohrs 3, welches als Kragen 10 ausgebildet ist, vollständig in die Haltenut 9 eingeführt ist. Dabei sind die Haltenut 9 und der Kragen 10 derart dimensioniert, dass die Innenwandung des ersten Anschlussrohrs 16 und die Innenwandung des zweiten Anschlussrohrs 17 fluchtend angeordnet sind, wodurch die Anschlussrohre 1, 3 in luftleitender Verbindung stehen.

Die Fig. 1 und 2 zeigen also das erfindungsgemäße Rohrkoppelsystem in vollständig eingeführter Verbindung zwischen erstem Anschlussrohr 1 und zweitem Anschlussrohr 3. An jenem dem Verbindungselement 2 entgegengesetzten Ende des zweiten Anschlussrohrs 3 ist ein Trockenrohr 15 angeordnet, welches aus Gründen der Vereinfachung in den Fig. 1 und 2 nicht gezeigt ist.

Um die Verbindung zwischen erstem Anschlussrohr 1 und zweitem Anschlussrohr 3 sichern zu können, ist eine Sicherungshülse 4 vorgesehen. Die Sicherungshülse 4 ist derart dimensioniert, dass sie das erste Anschlussrohr 1 sowie das zweite Anschlussrohr 3 vollständig umschließt. Der Innendurchmesser der Sicherungshülse 4 ist etwas größer als der Außendurchmesser des ersten Anschlussrohrs 1, wobei zur leichteren Verschiebbarkeit der Sicherungshülse 4 ein leichtes Spiel vorgesehen ist. Der Innendurchmesser der Sicherungshülse 4 ist in diesem Ausführungsbeispiel etwa 0,1 mm größer als der Außendurchmesser des ersten Anschlussrohrs 1. An der Innenseite der Sicherungshülse 4 ist ein Einführbereich 6 angeordnet, welcher entlang der Innenwand der Sicherungshülse 4 verläuft. Der Einführbereich ist in diesem Ausführungsbeispiel als Nut 22 ausgebildet. Die Nut 22 verläuft ausgehend von einer Kante der Sicherungshülse 4, wobei die Tiefe 14 des Einführbereichs 6 durch die Gesamtlänge der Nut 22 bestimmt wird. Die Nut 22 verläuft senkrecht, also im Wesentlichen parallel zur Haupterstreckungsrichtung der Sicherungshülse 4.

Die Sicherungshülse 4 weist eine Hülsenlänge 13 auf, wobei die Hülsenlänge 13 im Wesentlichen durch den Normalabstand zwischen zwei gegenüberliegenden Kanten der Sicherungshülse 4 bestimmt wird. Die Tiefe 14 des Einführbereichs 6 ist kleiner als die Hülsenlänge 13, was bedeutet, dass sich die Nut 22 nicht über die gesamte Länge der Sicherungshülse 4 erstreckt.

An der Außenfläche des ersten Anschlussrohrs 1 ist ein Eingriffsmittel 7 vorgesehen, welches in die Nut 22 eingreift. Das Eingriffsmittel 7 ist als Zapfen 8 ausgebildet. Das Eingriffsmittel 7 kann jedoch auch in anderen Formen ausgeführt sein, solange es in die Nut 22 der Sicherungshülse 4 eingreifen kann. Die Höhe der Nut 6 entspricht in diesem Ausführungsbeispiel der Höhe des Zapfens 6.

Fig. 1 zeigt das erfindungsgemäße Rohrkoppelsystem mit der Sicherungshülse 4 in Freigabestellung, wobei das Verteilerrohr 11, in welches das erste Anschlussrohr 1 eingeschraubt ist, als Anschlag 12 für die Sicherungshülse 4 dient. Der Abstand zwischen dem Anschlag 12 und dem Rastelement 7 ist so gestaltet, dass das Rastelement 7 nicht aus der Nut 22 herausrutschen kann. Der Abstand zwischen dem Anschlag 12 und dem Rastelement 7 ist also kleiner als die Hülsenlänge 13.

In der Freigabestellung gibt die Sicherungshülse 4 den Aufnahmebereich 5 des ersten Anschlussrohrs 1 vollständig frei, wodurch die Verbindung zwischen erstem Anschlussrohr 1 und zweitem Anschlussrohr 3 gelöst werden kann. Dies erfolgt durch Herausziehen des Verbindungselements 2 aus dem Aufnahmebereich 5. Bevorzugt wird die Sicherungshülse 4 händisch in der Freigabestellung gehalten, da diese durch die Wirkung der Schwerkraft in der gezeigten Anordnung sofort in die Sperrstellung rutschen würde.

Wird die Sicherungshülse 4 losgelassen, rutscht diese nach unten in die Sperrstellung, welche in Fig. 2 gezeigt ist. Dabei kann sich die Sicherungshülse 4 so weit nach unten bewegen, wie es die Tiefe 14 des Einführbereichs 6 vorgibt. Eine weitere Bewegung der Sicherungshülse 4 nach unten wird durch den Hülsenanschlag 21 an der Innenseite der Sicherungshülse 4 verhindert.

In der Sperrstellung bedeckt die Sicherungshülse 4 den Aufnahmebereich 5, in welchen das Verbindungselement 2 eingeführt ist. Da die Sicherungshülse 4 den Aufnahmebereich 5 vollständig umgibt, wird das Verbindungselement 2 am Herausrutschen aus dem Aufnahmebereich 5 gehindert. Dadurch wird eine stabile Verbindung zwischen dem ersten Anschlussrohr 1 und dem zweiten Anschlussrohr 3 ermöglicht.

Soll die Verbindung zwischen dem ersten Anschlussrohr 1 und dem zweiten Anschlussrohr 3 gelöst werden, muss die Sicherungshülse 4 wieder in eine Stellung bewegt werden, in der der Aufnahmebereich 5 freigegeben wird. Dies kann die in Fig. 1 gezeigte Freigabestellung sein, jedoch auch eine beliebige andere Stellung, in welcher die Verbindung zwischen Verbindungselement 2 und Aufnahmebereich 5 gelöst werden kann.

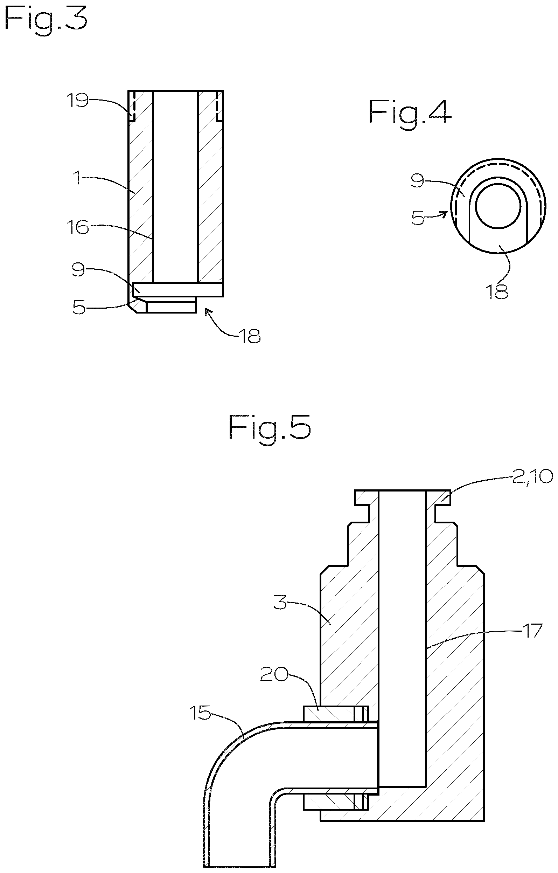

Fig. 3 zeigt eine schematische seitliche Schnittansicht eines ersten Anschlussrohrs 1 des erfindungsgemäßen Rohrkoppelsystems, wobei die Einführöffnung 18, sowie die Haltenut 9 des Aufnahmebereichs 5 gezeigt sind. Am gegenüberliegenden Ende des Aufnahmebereichs 5 ist das Gewinde 19 gezeigt, welches zum Einschrauben des ersten Anschlussrohrs 1 in ein Verteilerrohr 11 ausgebildet ist. Zwischen dem Aufnahmebereich 5 und dem Gewinde 19 erstreckt sich die Innenwandung des Anschlussrohrs 16.

Fig. 4 zeigt eine schematische Aufsicht des ersten Anschlussrohrs 1 aus Fig. 3, wobei die Einführöffnung 18 und die Haltenut 9 des Aufnahmebereichs 5 schematisch dargestellt sind.

Fig. 5 zeigt eine schematische seitliche Schnittansicht eines zweiten Anschlussrohrs 3 des erfindungsgemäßen Rohrkoppelsystems, mit welchem ein Trocknungsrohr 15 verbunden ist. Das zweite Anschlussrohr 3 weist an seinem oberen Ende ein Verbindungselement 2 auf, welches als Kragen 10 ausgeführt ist. Das Verbindungselement 2 ist dazu ausgebildet, in den entsprechenden Aufnahmebereich 5 eines ersten Anschlussrohrs 1 eingeführt zu werden.

Das Trocknungsrohr 15 ist über eine Steckverbindung 20 mit dem zweiten Anschlussrohr 3 verbunden. Das Trocknungsrohr 15 ist in der Fig. 5 nicht im Detail dargestellt. Es kann unterschiedliche Formen zur Halterung verschiedener Gegenstände, insbesondere Kleidungsstücke, aufweisen. Jedenfalls weist das Trocknungsrohr 15 wenigstens eine, vorzugsweise mehrere, Luftaustrittsöffnungen auf, aus welchen die von einer Luftversorgungsvorrichtung bereitgestellte Luft austreten kann.

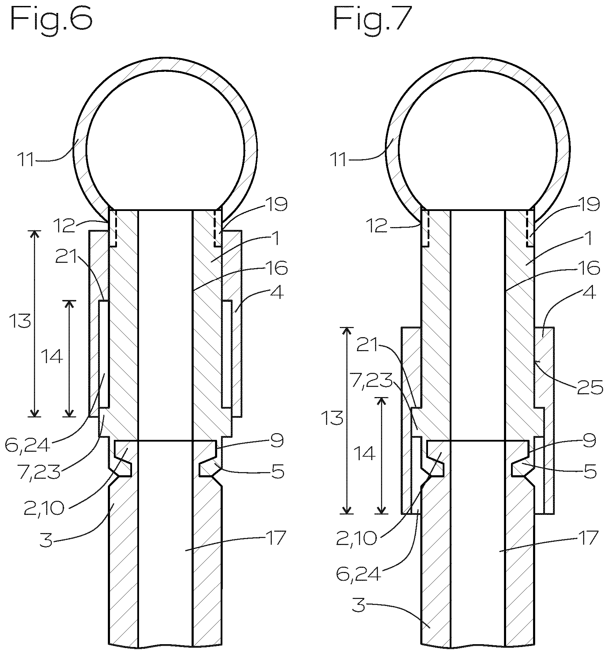

Fig 6 zeigt eine schematische seitliche Schnittansicht eines weiteren Beispiels eines Rohrkoppelsystems in verbundenem Zustand mit Sicherungshülse 4 in Freigabestellung, während Fig. 7 dasselbe Ausführungsbeispiel mit Sicherungshülse 4 in Sperrstellung zeigt.

In diesem Beispiel ist der Einführbereich 6 durch einen Falz 24 gebildet, welche den inneren Durchmesser der Sicherungshülse 4 vollständig umlaufend ausgebildet ist. Das Rastelement 7, welches in Sperrstellung in Wirkverbindung mit dem Einführbereich 6 bzw. mit dem Hülsenanschlag 21 steht, ist in diesem Beispiel als Haltering 23 ausgebildet, welcher den äußeren Durchmesser des ersten Anschlussrohrs 1 vollständig umlaufend ausgebildet ist. Die Höhe des Halterings 23 entspricht im Wesentlichen der Höhe des Falzes 24.

### Bezugszeichenliste

- 1: erstes Anschlussrohr
- 2: Verbindungselement
- 3: zweites Anschlussrohr
- 4: Sicherungshülse
- 5: Aufnahmebereich
- 6: Einführbereich
- 7: Rastelement
- 8: Zapfen
- 9: Haltenut
- 10: Kragen
- 11: Verteilerrohr
- 12: Anschlag
- 13: Hülsenlänge
- 14: Tiefe
- 15: Trocknungsrohr
- 16: Innenwandung des ersten Anschlussrohrs
- 17: Innenwandung des zweiten Anschlussrohrs
- 18: Einführöffnung
- 19: Gewinde
- 20: Steckverbindung
- 21: Hülsenanschlag
- 22: Nut
- 23: Haltering
- 24: Falz
- 25: Innenwandung

## Patentansprüche

1. **Rohrkoppelsystem,** insbesondere für eine Trocknungsanlage, umfassend ein erstes Anschlussrohr (1), ein mit dem ersten Anschlussrohr (1) über ein Verbindungselement (2) verbindbares zweites Anschlussrohr (3), sowie eine Sicherungshülse (4), wobei das Verbindungselement (2) in einen Aufnahmebereich (5) des ersten Anschlussrohrs (1) einführbar ist, und wobei die Sicherungshülse (4) über dem Aufnahmebereich (5) positionierbar ist,
wobei die Sicherungshülse (4) an ihrer Innenwandung (25) einen Einführbereich (6) aufweist, in welchen ein an der Außenseite des ersten Anschlussrohrs (1) oder des zweiten Anschlussrohrs (3) angeordnetes Rastelement (7) einführbar oder eingeführt ist, **dadurch gekennzeichnet, dass** der Einführbereich (6) als Nut (22) ausgebildet ist und dass die Nut (22) parallel zur Haupterstreckungsrichtung der Sicherungshülse (4) verläuft.

2. Rohrkoppelsystem nach Anspruch 1, **dadurch gekennzeichnet, dass** das Rastelement (7) als Zapfen (8) ausgebildet ist.

3. Rohrkoppelsystem nach einem der Ansprüche 1 oder 2, **dadurch gekennzeichnet, dass** das Rastelement (7) als das erste Anschlussrohr (1) teilweise oder vollständig radial umlaufender Haltering ausgebildet ist, oder dass das Rastelement (7) als Vorsprung des ersten Anschlussrohrs (1) oder des zweiten Anschlussrohrs (3) ausgebildet ist.

4. Rohrkoppelsystem nach einem der Ansprüche 1 bis 3, **dadurch gekennzeichnet, dass** die Sicherungshülse (4) zwischen einer Freigabestellung und einer Sperrstellung bewegbar ist, wobei die Sicherungshülse (4) in der Freigabestellung den Anschlussbereich (5) freigibt, und wobei die Sicherungshülse (4) in der Sperrstellung wenigstens teilweise über dem Anschlussbereich (5) angeordnet ist.

5. Rohrkoppelsystem nach einem der Ansprüche 1 bis 4, **dadurch gekennzeichnet, dass** am inneren Umfang der Sicherungshülse (4) ein Anschlag (21) vorgesehen ist, wobei die Tiefe (14) des Einführbereichs (6) kleiner ist als die Hülsenlänge (13) der Sicherungshülse (4).

6. Rohrkoppelsystem nach einem der Ansprüche 1 bis 5, **dadurch gekennzeichnet, dass** die Tiefe (14) des Einführbereichs (6) größer als der Abstand des Rastelements (7) zum Aufnahmebereich (5) ist.

7. Rohrkoppelsystem nach einem der Ansprüche 1 bis 6, **dadurch gekennzeichnet, dass** der Aufnahmebereich (5) eine den inneren Umfang des ersten Anschlussrohres (1) teilweise umlaufende Haltenut (9) umfasst, und dass das Verbindungselement (2) als Kragen (10) ausgebildet ist, wobei der Kragen (10) derart ausgeführt ist, dass er in die Haltenut (9) einführbar ist.

8. Rohrkoppelsystem nach einem der Ansprüche 1 bis 7, **dadurch gekennzeichnet, dass** das erste Anschlussrohr (1) oder das zweite Anschlussrohr (3) an einem Verteilerrohr (11) angeordnet ist, wobei die Haupterstreckungsrichtung des Verteilerrohrs (11) orthogonal zur Haupterstreckungsrichtung des ersten Anschlussrohrs (1) oder des zweiten Anschlussrohrs (3) verläuft.

9. Rohrkoppelsystem nach Anspruch 8, **dadurch gekennzeichnet, dass** das Verteilerrohr (11) einen Anschlag (12) für die Sicherungshülse (4) bildet, wobei der Abstand des Rastelements (7) zum Anschlag (12) kleiner als die Hülsenlänge (13) ist.

10. Rohrkoppelsystem nach Anspruch 8 oder 9, **dadurch gekennzeichnet, dass** das mit dem Verteilerrohr verbundene Anschlussrohr (1, 3) ein Gewinde (19) zur lösbaren Verbindung mit dem Verteilerrohr (11) umfasst.

11. Rohrkoppelsystem nach einem der Ansprüche 1 bis 10, **dadurch gekennzeichnet, dass** am ersten Anschlussrohr (1) oder am zweiten Anschlussrohr (3) ein Trocknungsrohr (15) angeordnet ist, wobei das Trocknungsrohr (15) wenigstens eine Luftauslassöffnung umfasst.

12. Rohrkoppelsystem nach Anspruch 11, **dadurch gekennzeichnet, dass** das Trocknungsrohr (15) über eine Steckverbindung (20) mit dem ersten Anschlussrohr (1) oder dem zweiten Anschlussrohr (3) lösbar verbindbar ist.

13. Rohrkoppelsystem nach einem der Ansprüche 1 bis 12, **dadurch gekennzeichnet, dass** in vollständig eingeführter Stellung des Verbindungselements (2) in den Aufnahmebereich (5) die Innenwandung des ersten Anschlussrohrs (16) mit der Innenwandung des zweiten Anschlussrohrs (17) fluchtend angeordnet ist.

14. Rohrkoppelsystem nach einem der Ansprüche 1 bis 13, **dadurch gekennzeichnet, dass** der Aufnahmebereich (5) zum Einführen des Verbindungselements (2) eine Einführöffnung (18) umfasst.

15. Rohrkoppelsystem nach einem der Ansprüche 8 bis 14, **dadurch gekennzeichnet,**
- **dass** das Rastelement (7) am ersten Anschlussrohr (1) angeordnet ist,
- **dass** das erste Anschlussrohr (1) mit dem Verteilerrohr verbunden oder verbindbar ist, und
- **dass** das Trocknungsrohr am zweiten Anschlussrohr (3) anordenbar oder angeordnet ist.

16. **Trocknungsvorrichtung** umfassend ein Rohrkoppelsystem nach einem der Ansprüche 1 bis 15.

## Claims

1. A **pipe coupling system,** in particular for a drying device, comprising a first connecting pipe (1), a second connecting pipe (3) which can be connected to the first connecting pipe (1) via a connecting element (2), and a securing sleeve (4), wherein the connecting element (2) can be inserted into a receiving area (5) of the first connecting pipe (1), and wherein the securing sleeve (4) can be positioned over the receiving area (5),
wherein the securing sleeve (4) on its inner wall (25) has an insertion area (6) into which a latching element (7) arranged on the outer side of the first connecting pipe (1) or the second connecting pipe (3) can be inserted or is inserted, **characterized in that** the insertion area (6) is designed as a groove (22) and **in that** the groove (22) runs parallel to the main extension direction of the securing sleeve (4).

2. The pipe coupling system according to claim 1, **characterized in that** the latching element (7) is designed as a peg (8).

3. The pipe coupling system according to claim 1 or 2, **characterized in that** the latching element (7) is designed as a retaining ring partially or completely radially surrounding the first connecting pipe (1), or **in that** the latching element (7) is designed as a projection of the first connecting pipe (1) or the second connecting pipe (3).

4. The pipe coupling system according to one of claims 1 to 3, **characterized in that** the securing sleeve (4) can be moved between a release position and a locking position, wherein the securing sleeve (4) in the release position releases the connecting area (5), and wherein the securing sleeve (4) in the locking position is arranged at least partially over the connecting area (5).

5. The pipe coupling system according to one of claims 1 to 4, **characterized in that** a stop (21) is provided on the inner circumference of the securing sleeve (4), wherein the depth (14) of the insertion area (6) is smaller than the sleeve length (13) of the securing sleeve (4).

6. The pipe coupling system according to one of claims 1 to 5, **characterized in that** the depth (14) of the insertion area (6) is greater than the distance between the latching element (7) and the receiving area (5).

7. The pipe coupling system according to one of claims 1 to 6, **characterized in that** the receiving area (5) comprises a retaining groove (9) partially surrounding the inner circumference of the first connecting pipe (1), and **in that** the connecting element (2) is designed as a collar (10), wherein the collar (10) is configured in such a way that it can be inserted into the retaining groove (9).

8. The pipe coupling system according to one of claims 1 to 7, **characterized in that** the first connecting pipe (1) or the second connecting pipe (3) is arranged on a distribution pipe (11), wherein the main extension direction of the distribution pipe (11) runs orthogonally to the main extension direction of the first connecting pipe (1) or the second connecting pipe (3).

9. The pipe coupling system according to claim 8, **characterized in that** the distribution pipe (11) forms a stop (12) for the securing sleeve (4), wherein the distance between the latching element (7) and the stop (12) is smaller than the sleeve length (13).

10. The pipe coupling system according to claim 8 or 9, **characterized in that** the connecting pipe (1, 3) connected to the distribution pipe comprises a thread (19) for detachably connecting to the distribution pipe (11).

11. The pipe coupling system according to one of claims 1 to 10, **characterized in that** a drying pipe (15) is arranged on the first connecting pipe (1) or the second connecting pipe (3), the drying pipe (15) comprising at least an air outlet opening.

12. The pipe coupling system according to claim 11, **characterized in that** the drying pipe (15) can be detachably connected to the first connecting pipe (1) or the second connecting pipe (3) via a plug connection (20).

13. The pipe coupling system according to one of claims 1 to 12, **characterized in that**, in the fully inserted position of the connecting element (2) in the receiving area (5), the inner wall of the first connecting pipe (16) is arranged in alignment with the inner wall of the second connecting pipe (17).

14. The pipe coupling system according to one of claims 1 to 13, **characterized in that** the receiving area (5) comprises an insertion opening (18) for inserting the connecting element (2).

15. The pipe coupling system according to one of claims 8 to 14, **characterized in**
- **that** the latching element (7) is arranged on the first connecting pipe (1),
- **that** the first connecting pipe (1) is connected or can be connected to the distribution pipe, and
- in that the drying pipe can be arranged or is arranged on the second connecting pipe (3).

16. A **drying device,** comprising a pipe coupling system according to one of claims 1 to 15.

## Revendications

1. Un **système de couplage de tubes,** en particulier pour une installation de séchage, comprenant un premier tube de raccordement (1), un deuxième tube de raccordement (3) pouvant être relié au premier tube de raccordement (1) par un élément de liaison (2), ainsi qu'une douille de sécurité (4), l'élément de liaison (2) pouvant être introduit dans une zone de réception (5) du premier tube de raccordement (1), et la douille de sécurité (4) pouvant être positionnée sur la zone de réception (5),
la douille de sécurité (4) présentant sur sa paroi intérieure (25) une zone d'introduction (6), dans laquelle peut être introduit ou est introduit un élément d'encliquetage (7) disposé sur le côté extérieur du premier tube de raccordement (1) ou du deuxième tube de raccordement (3), **caractérisée en ce que** la zone d'introduction (6) est réalisée sous forme de rainure (22) et **en ce que** la rainure (22) s'étend parallèlement à la direction d'extension principale de la douille de sécurité (4).

2. Le système de couplage de tubes selon la revendication 1, **caractérisé en ce que** l'élément d'encliquetage (7) est réalisé sous forme de tenon (8).

3. Le système de couplage de tubes selon l'une des revendications 1 ou 2, **caractérisé en ce que** l'élément d'encliquetage (7) est réalisé sous forme d'un anneau de retenue entourant partiellement ou entièrement radialement le premier tube de raccordement (1), ou **en ce que** l'élément d'encliquetage (7) est réalisé sous forme de saillie du premier tube de raccordement (1) ou du deuxième tube de raccordement (3).

4. Le système de couplage de tubes selon l'une des revendications 1 à 3, **caractérisé en ce que** la douille de sécurité (4) est déplaçable entre une position de déblocage et une position de blocage, la douille de sécurité (4) libérant la zone de raccordement (5) dans la position de déblocage, et la douille de sécurité (4) étant disposée au moins partiellement sur la zone de raccordement (5) dans la position de blocage.

5. Le système de couplage de tubes selon l'une des revendications 1 à 4, **caractérisé en ce que** une butée (21) est prévue sur la circonférence intérieure de la douille de sécurité (4), la profondeur (14) de la zone d'introduction (6) étant inférieure à la longueur de douille (13) de la douille de sécurité (4).

6. Le système de couplage de tubes selon l'une des revendications 1 à 5, **caractérisé en ce que** la profondeur (14) de la zone d'introduction (6) est supérieure à la distance entre l'élément d'encliquetage (7) et la zone de réception (5).

7. Le système de couplage de tubes selon l'une des revendications 1 à 6, **caractérisé en ce que** la zone de réception (5) comprend une rainure de retenue (9) entourant partiellement la circonférence intérieure du premier tube de raccordement (1), et **en ce que** l'élément de liaison (2) est réalisé sous forme de collerette (10), la collerette (10) étant réalisée de telle sorte qu'elle peut être introduite dans la rainure de retenue (9).

8. Le système de couplage de tubes selon l'une des revendications 1 à 7, **caractérisé en ce que** le premier tube de raccordement (1) ou le deuxième tube de raccordement (3) est disposé sur un tube de distribution (11), la direction d'extension principale du tube de distribution (11) s'étendant orthogonalement à la direction d'extension principale du premier tube de raccordement (1) ou du deuxième tube de raccordement (3).

9. Le système de couplage de tubes selon la revendication 8, **caractérisé en ce que** le tube de distribution (11) forme une butée (12) pour la douille de sécurité (4), la distance entre l'élément d'encliquetage (7) et la butée (12) étant inférieure à la longueur de douille (13).

10. Le système de couplage de tubes selon la revendication 8 ou 9, **caractérisé en ce que** le tube de raccordement (1, 3) relié au tube de distribution comprend un filetage (19) pour une liaison de façon amovible avec le tube de distribution (11).

11. Le système de couplage de tubes selon l'une des revendications 1 à 10, **caractérisé en ce que** un tube de séchage (15) est disposé sur le premier tube de raccordement (1) ou sur le deuxième tube de raccordement (3), le tube de séchage (15) comprenant au moins une ouverture de sortie d'air.

12. Le système de couplage de tubes selon la revendication 11, **caractérisé en ce que** le tube de séchage (15) peut être relié de façon amovible au premier tube de raccordement (1) ou au deuxième tube de raccordement (3) par une liaison à enfichage.

13. Le système de couplage de tubes selon l'une des revendications 1 à 12, **caractérisé en ce que**, dans la position complètement insérée de l'élément de liaison (2) dans la zone de réception (5), la paroi intérieure du premier tube de raccordement (16) est alignée avec la paroi intérieure du deuxième tube de raccordement (17).

14. Le système de couplage de tubes selon l'une des revendications 1 à 13, **caractérisé en ce que** la zone de réception (5) comprend une ouverture d'introduction (18) pour l'introduction de l'élément de liaison (2).

15. Le système de couplage de tubes selon l'une des revendications 8 à 14, **caractérisé**
- **en ce que** l'élément d'encliquetage (7) est disposé sur le premier tube de raccordement (1),
- et **en ce que** le premier tube de raccordement (1) est relié ou peut être relié au tube de distribution (11), et
- **en ce que** le tube de séchage peut être disposé ou est disposé sur sur le deuxième tube de raccordement (3).

16. Un **dispositif de séchage** comprenant un système de couplage de tubes selon l'une des revendications 1 à 15.
